# EUROPEAN PATENT APPLICATION

(11) **EP 1 402 781 A1**
(43) Date of publication of application: **31.03.2004**
(21) Application number: 02728232.6
(22) Date of filing: 04.06.2002
(51) Int. Cl.: A21D 2/14

(54) **COATED ORGANIC ACID PREPARATIONS FOR PRESERVING BAKERY PRODUCTS**

(30) Priority: 05.06.2001 JP 2001169839
(71) Applicant: Kabushiki Kaisha Ueno Seiyaku Oyo Kenkyujo, Osaka-shi, Osaka 541-0043 (JP)
(72) Inventor: UENO, Ryuzo, Nishinomiya-shi, Hyogo 662-0038 (JP); TABATA, Akihiko, Kawanishi-shi, Hyogo 666-0122 (JP); SATO, Hideaki, Nishinomiya-shi, Hyogo 662-0066 (JP)
(74) Representative: Albrecht, Thomas, Dr.
(86) International application number: PCT/JP2002/005467
(87) International publication number: WO 2002/098237

(57) **Abstract**

Provided is a coated organic acid preparation for preserving bakery products, which is obtained by coating an organic acid with a coating agent having a melting point of 64-98°C, provided that the bakery products are not those manufactured by yeast fermentation. By using the coated organic acid preparation of the present invention, bakery products with improved shelf life are provided without affecting the volume; appearance, taste or flavor of the baked product.

## Description

### Technical Field

The present invention is relates to coated organic acid preparations for preserving bakery products other than those manufactured by yeast fermentation. The term "bakery products" herein represents those other than manufactured by yeast fermentation, unless otherwise indicated.

### Related Art

In order to improve the shelf life of a food product, the degree of contamination with microorganisms should be kept as low as possible. Various preservatives, suitable for respective food products to be preserved, have been proposed. Among the known preservatives, sorbic acid is the most commonly used for wide variety of food products. Sorbic acid is a stable compound, has less affect on the taste and flavor of the food product as well as exhibits an excellent anti-microorganism effect on bacteria, fungus and yeasts. Accordingly, sorbic acid has been used for long time as a major preservative for food products, especially for fish-paste product, dried marine products and pickles. However, direct addition of sorbic acid to the minced fish lowers pH and causes loss of elasticity of the product, which significantly deteriorates the quality of the fish past product. In order to solve the problem, so-called coated-sorbic acid product, which is fats and oil-coated sorbic acid, has been employed. The fats and oil coatings employed for the coated sorbic acid product are hydrogenated oils such as hydrogenated beef tallow oil, hydrogenated canola oil and hydrogenated soybean oil. However, due to their higher melting point, hydrogenated canola oil and hydrogenated soybean oil may cause blotch formation on fish-paste product to deteriorate the product's value. Hydrogenated beef tallow oil with lower melting point has, therefore, been generally used as a coating agent. When said coated-sorbic acid product is admixed with minced fish meat, sorbic acid hardly solve-out at the ambient temperature and the pH of the minced fish meat is not affected. After the heating step, sorbic acid solve out to provide a fish-paste product with good preserveability without deteriorating the elasticity.

Propionic acid or salts thereof, especially sodium salt has been used for preserving bakery products including those manufactured by yeast fermentation. However, propionic acid and salts thereof have no effect on yeasts and less effect than sorbic acid on fungus and bacteria. Due to its strange odor, an enough amount of the acid or the salt cannot be admixed in the bakery product and it has not been deemed being a satisfying preservative for a bakery product including those manufactured by yeast fermentation. Sorbic acid has biocidal activity on yeasts and therefore, when sorbic acid is used for manufacturing a bakery product the product cannot expand well.

### Problems to be solved by the present invention

The inventors tried to use the coated-sorbic acid product, which had been used as a preservative for fish paste products, for bakery products. However, the coated-organic acid preparation with fats and oil having lower-melting point solved-out at an earlier stage of the baking process for manufacturing sponge cake and resulted in significantly lower volume of the product after the baking and cooling steps those without the preservative. In case the coated organic acid preparation with a coating having higher melting point, the coating did not solve well after the baking process or the organic acid did not solve out well and resulted in insufficient shelf life of the product. The object of the present invention is to provide a coated organic acid preparation which is suitable for preserving bakery products and does not deteriorate expansion during the baking process of the product.

### Summary of the Invention

Heretofore, food preservative which does not restraint expansion during the baking process of the product and can provide a sufficient preserving effect has not been known. The instant inventors studied intensively and reached a coated organic acid preparation for preserving bakery products which does not affect volume, appearance, taste and flavor of the product and gives longer shelf life to the product.

Accordingly, the present invention relates to a coated organic acid preparation for preserving bakery products, which is obtained by coating an organic acid with a coating agent having a melting point of 64-98°C, preferably 64-68°C.

Organic acid used in the present invention may include those generally used for preparing food products such as sorbic acid and fumaric acid, and sorbic acid is preferable in terms of taste and biocidal activity when added to a food product.

When sorbic acid is used as an organic acid, the ratio between sorbic acid and the coating agent is preferably about 1:1-1:10, more preferably about 1:1-1:3.

According to the present invention, the coating agent used for coating the organic acid may be any as long as of which melting point is between 64°C and 98°C, and those having melting point of 64-68°C are preferable. By using a coating agent having a melting point within the range for the preparation, a baked bakery product with excellent shelf life without deteriorating expansion upon baking the product can be provided.

In terms of the taste and flavor of the resulting baked product, hydrogenated oils are preferably used for the coating agent. Examples of the hydrogenated oils include commercially available hydrogenated oils such as hydrogenated canola oil, hydrogenated soybean oil and hydrogenated caster oil. Among them, hydrogenated canola oil is especially preferable. The coating agent may comprise 2 or more hydrogenated oils as long as the melting point of the coating agent is in the range of 64-98°C. The coating agent may further comprise components other than hydrogenated oils, for example beeswax, fatty acids such as paraffin, stearic acid, palmitic acid and myristic acid, mono-, di- or tri-fatty acid glyceride, sorbitan fatty acid ester and lecithin. When those components are added to the hydrogenated oil, the ratio to the hydrogenated oils may be determined so that the melting point of the coating agent is within the range of 64-98°C. For example, about 0.01-100, especially 0.05-10 parts by weight of lecithin may preferably be added to 100 parts by weight of the hydrogenated oils.

According to the present invention, coating of the organic acid with the coating agent may be effected by granulating or molding a mixture of the organic acid and the heat-melted coating agent, such as hydrogenated oils. The granulating or molding may be carried out by means of melt granulation, extrusion granulation, crush granulation or compression molding. Alternatively, it may be by spray drying of a mixture of the organic acid and a solution of the hydrogenated oils in a vehicle to give the particles. Melt granulation is preferably employed.

In terms of operability of the preparation and dispersibility in the bakery product, the particle size of thus obtained coated particles is preferably adjusted to equal to or less than mesh No. 12. The lower limit of the particle size is not definite and usually, is equal to or more than mesh No. 200.

The term "bakery product" used herein represents a food product obtained by the process of mixing grain powder material such as flour or corn starch with a binder component such as water, milk, egg or butter to give batter; and cooking, such as baking, frying in oil or steaming, the batter to give an expanded product. Since the batter is expanded by cooking, the batter is usually admixed with baking powder, baking soda, egg, butter, margarine or the like. The "bakery product" according to the instant invention does not contain those manufactured by means of yeast fermentation. The bakery product of the present invention may further be admixed with additives such as egg, fats and oil such as butter and margarine, sugar and salt, necessary for manufacturing the desired product.

The coated organic acid preparation of the present invention is added to batter of a bakery product, and the batter is cooked to give the final product. Accordingly, the method for manufacturing a bakery product comprising; preparing batter for the bakery product comprising grain powder, a binder component and the coated organic acid preparation of the present invention and cooking thereof is also within the range of the present invention. The ingredients, blending manner, blending ratio, additives other than the coated organic acid preparation, cooking manner and time and the like may be determined based on conventional bakery product.

The amount of the coated organic acid preparation added to the batter is not limited and for example, 0.09-0.9 wt%, preferably 0.15-0.6 wt% of the preparation based on the total amount of the batter may be added.

The coated organic acid preparation of the invention may preferably be applied to bakery products such as sponge cake, American muffin and doughnut, and the preparation can exert most powerful effect on sponge cakes.

The coated organic acid preparation of the present invention may be used in combination with a conventional food preservative as long as said preservative does not impair the expansion upon cooking of the bakery product. Examples of such food preservatives may include potassium sorbate and sodium propionate. By means of the combined use of those food preservatives and the coated organic preparation of the invention, bakery products with far improved shelf life are provided.

The present invention will be understood more readily with reference to the following examples. However, these examples are intended only to illustrate the invention and are not to be construed to limit the scope of the invention.

### Example 1

### Preparation of coated sorbic acid.

Lecithin 1g and hydrogenated canola oil 666g were molten by heating. At the time the temperature was reached to about 100°C, sorbic acid 333g was added gradually to the stirred mixture. Then, the obtained mixture was mixed uniformly with homomixer at 8000rpm for 5 minutes, and filled into dropping funnel (inside diameter: 2mm) at about 80°C. The mixture was allowed to drip on the atomizer rotating at 5000rpm to spray the mixture into the air and cooling the same to give the coated sorbic acid preparation. The obtained preparation was stood at 50°C for 1.5 hour to give the coated sorbic acid preparation of the example and the preparation was used in the test example below.

A coated sorbic acid preparation of another example was prepared in the same manner as above with the exception that hydrogenated soybean oil was used in stead of hydrogenated canola oil and stood the preparation at 60°C for 1.5 hour.

A coated sorbic acid preparation of comparative example was prepared in the same manner as above with the exception that hydrogenated beef tallow oil was used in stead of hydrogenated canola oil and the stood preparation at 45°C for 1 hour.

### Measurement of the melting point of the coating agent

The above obtained coated sorbic acid preparations were dried in vacuo at the ambient temperature for 1 hour, put into sealed sample container (made of Ag, 15µl) and subjected melting point determination with differential scanning calorimetry (DSC type 6200: SEIKO INSTURUMENTS INC). The measurement was carried out under the temperature range of 30-140°C at the heating rate of 4°C/min and the top of the observed peak was recorded as the melting point. The results were that melting point of the hydrogenated canola oil coating agent was 68°C; of the hydrogenated soybean oil coating agent was 68°C and the hydrogenated beef tallow oil coating agent was 60°C.

### Example 2

### Manufacture of sponge cake

Whole egg 112.5g was heated to approximately 37°C and beaten for 30 seconds with electric mixer. White very refined sugar 93.75g was added thereto and beaten on a water bath at 40°C until the relative density of the mixture reached 0.28g/cc. Sifted soft flour 93.7g previously admixed with the coated sorbic acid preparation of the invention was added to the mixture and mixed with plastic spatula to give the batter. The batter was poured in the cake mold (diameter 18cm), the mold was dropped from approximately 10cm high for three times to let the air out of the batter and was baked at 170°C for 30 minutes in an oven. After the baking, the obtained sponge cake was dropped from approximately 10cm high for about 3 times to give cracks and let the air out of the sponge cake and then, cooled.

The coated sorbic acid preparation of the present invention added to soft flour was that obtained by sieving the preparation so that the particle size is less than 48-mesh, and 0.3 wt% of the preparation, which is equivalent to 0.1wt% as sorbic acid, based on the total amount of the batter was added to the soft flour. In comparative examples, sponge cakes were prepared in the same manner as above using 0.3 wt% of coated sorbic acid preparation prepared with hydrogenated beef tallow oil, which is equivalent to 0.1wt% as sorbic acid; 0.1wt% of sorbic acid; 0.14wt% of potassium sorbate, which is equivalent to 0.1wt% as sorbic acid; and 0.12 wt% of potassium propionate, which is equivalent to 0.1 wt% as propionic acid, respectively.

Preparations used for the respective examples are as follows:
Present invention 1: coated sorbic acid preparation with hydrogenated canola oil, 0.3 wt%
Present invention 2: coated sorbic acid preparation with hydrogenated soybean oil, 0.3 wt%

Comparative example 1: coated sorbic acid preparation with hydrogenated beef tallow oil, 0.3 wt%
Comparative example 2: sorbic acid, 0.1wt%
Comparative example 3: potassium sorbate, 0.14wt%
Comparative example 4: potassium propionate, 0.12wt%

### Measurement of Sponge Cake Volume

The obtained sponge cake was put in a container having inner volume of 3500cm2 (diameter 21cm x height 10cm), and the remaining gaps were filled with millet seeds. After leveled over the surface, the volume of the millet seeds in the container was determined by means of graduated cylinder. The volume of the sponge cake was obtained by deducting the millet seeds volume from the inner volume of the container. The weight of the sponge cake was also measured and the volume per 100g was calculated.

### Sponge Cake Preservation Test

The obtained sponge cakes were kept in the temperature-controlled chamber at 30°C and the appearance was observed chronologically.

### Result

No inhibition against the expansion upon the baking process was observed in the sponge cake added with the coated sorbic acid preparation of the invention, and the cake had a good shelf life. Results are shown in Tables 1 and 2.

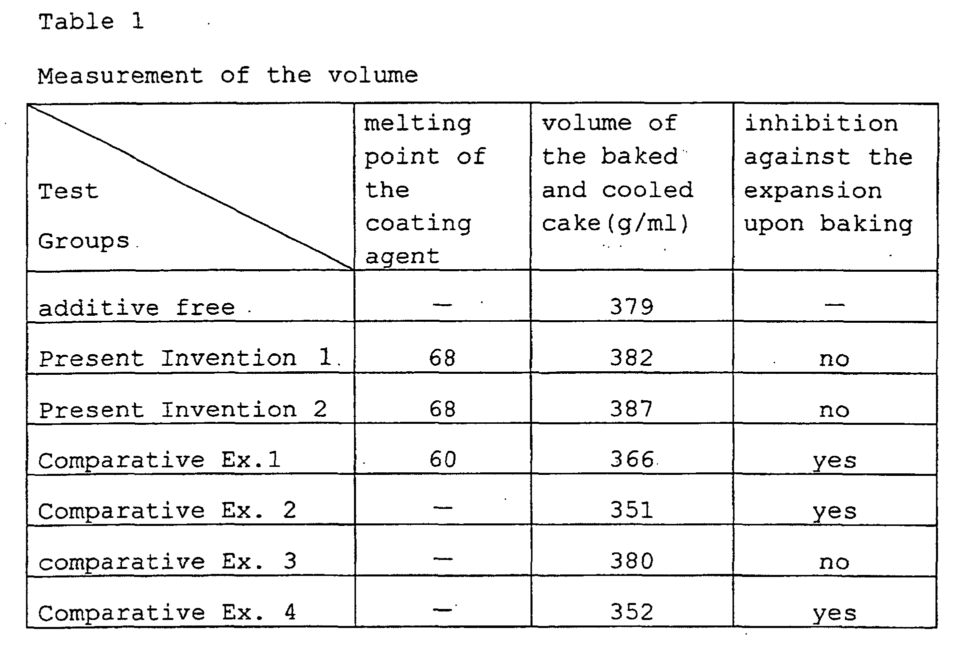

**Table 2**

| Appearance (Fungus) | | | | | | |
|---|---|---|---|---|---|---|
| Test Groups | Storage time (at 30°C) | | | | | |
| | start | 1 wk | 2 wk | 3 wk | 4 wk | 5 wk |
| additive-free | - | + | + | + | + | + |
| Present Invention 1 | - | - | - | - | + | + |
| Present Invention 2 | - | - | - | - | + | + |
| Comparative Ex. 1 | - | - | - | - | + | + |
| Comparative Ex. 2 | - | - | - | - | + | + |
| comparative Ex. 3 | - | - | - | + | + | + |
| Comparative Ex. 4 | - | - | + | + | + | + |
| -: No fungus, +: Fungus | | | | | | |

### Example 3

### Manufacture of American Muffin

Shortening 8.2g, salt 0.37g and white very refined sugar 10.25g were mixed together with electric mixer until the relative density of the mixture reached 0.7, and whole egg 8.2g was added thereto and further beaten until density of the mixture reached 0.6. Then, milk 22.13g, water 8.2g and vanilla essence 0.03g were added thereto and beaten for more 1 minute and 30 seconds. Soft flour previously admixed with the preparation and baking powder 42.82g, which is consisting of soft flour 40.98g, baking powder 1.64g, and the coated sorbic acid preparation 0.2g, was added to the mixture and mixed with plastic spatula to give the batter. The whole batter was poured in the muffin mold (diameter 6.5cm), baked in an oven at 160°C for 35 minutes and then, allowed to cool to the room temperature to give ameriacan muffin.

The coated sorbic acid preparation of the present invention added to soft flour was that obtained by sieving the preparation so that the particle size is less than mesh No. 48, and 0.6 wt% of the preparation, which is equivalent to 0.2 wt% as sorbic acid, based on the total amount of the batter, was added to the soft flour. In comparative examples, American muffins were prepared in the same manner as above using 0.1 wt% of sorbic acid; 0.2 wt% of sorbic acid; 0.25 wt% of potassium sorbate, which is equivalent to 0.2 wt% as sorbic acid; and 0.27 wt% of potassium propionate, which is equivalent to 0.2 wt% as propionic acid, respectively.

Preparations used for the respective examples are as follows:
Present invention 3: coated sorbic acid preparation with hydrogenated canola oil, 0.6 wt%
Comparative example 5: sorbic acid, 0.1 wt%
Comparative example 6: sorbic acid, 0.2 wt%
Comparative example 7: potassium sorbate, 0.25 wt%
Comparative example 8: potassium propionate, 0.27 wt%

### Measurement of American Muffin Volume

The volume of the obtained american muffin was determined in the same manner as Example 2.

### American muffin Preservation test

Thus obtained american muffins were kept in the temperature-controlled chamber at 30°C and the number of the bacteria generated in the muffin was determined chronologically.

### Measurement of Bacteria Number

Standard methods agar (Nihon Pharmaceutical Co., Ltd) 22.5g was dissolved in 1000ml of water by heating, autoclaved at 121°C for 15 minutes and after that, kept at 50°C. The sample 1ml was put in a Petri dish and then the medium about 20ml at 50°C was poured into the dish. The medium was allowed to set with stirring and incubated for 48 hours at 37°C. The number of the colonies observed was counted.

The american muffin about 5g was dispersed in 10 times of sterilized saline (NaCl 0.9%), mixed well with stomacher and then, the supernatant of the mixture was used as sample. When too many colonies were developed and overlapped each other to make the counting difficult, the supernatant was further diluted in 10-fold serial dilution.

### Result

No inhibition against the expansion upon the baking process was observed in the american muffin added with the coated sorbic acid preparation of the invention, and the cake had a good shelf life. Results are shown in Tables 3 and 4.

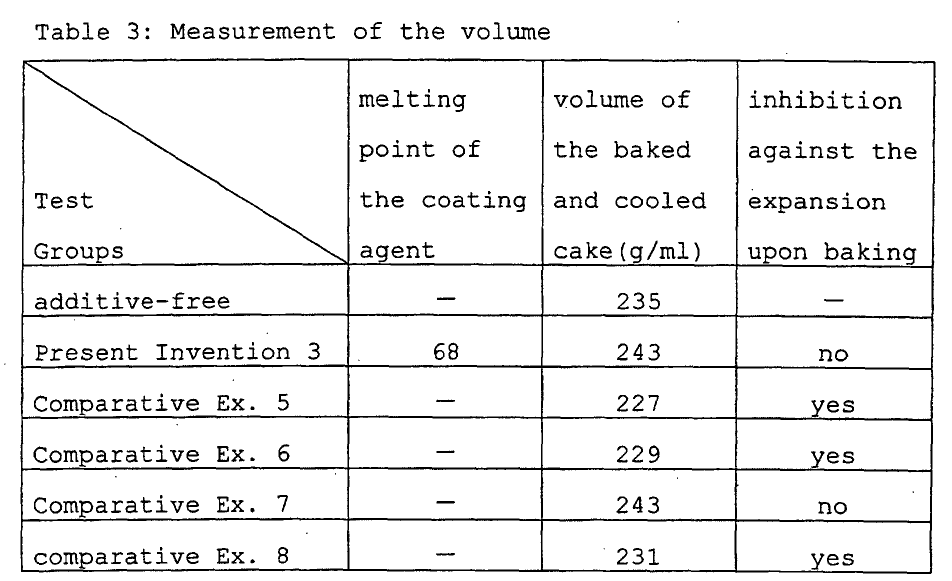

**Table 4**

| Preservation Test | | | | |
|---|---|---|---|---|
| Test Groups | Storage time (at 30°C) cpu/g | | | |
| | start | 1 day | 6 days | 18 days |
| additive-free | <10 | 9.6×10⁴ | >10⁸ | >10⁸ |
| Present Invention 3 | <10 | <10 | <10 | 3.8×10 |
| Comparative Ex. 5 | <10 | <10 | 6.6×10⁵ | 7.9×10⁶ |
| Comparative Ex. 6 | <10 | <10 | <10 | 4.0×10 |
| Comparative Ex. 7 | <10 | <10 | 9.0×10 | 1.4×10⁷ |
| comparative Ex. 8 | <10 | <10 | <10 | >10⁸ |

### Industrial Applicability

The coated organic acid preparation is preferably used for preserving bakery products. By using the coated organic acid preparation of the present invention, bakery products with improved shelf life are provided without affecting the volume, appearance, taste or flavor of the baked product.

## Claims

1. A coated organic acid preparation for preserving bakery products, which is obtained by coating an organic acid with a coating agent having a melting point of 64-98°C, provided that the bakery products are not those manufactured by yeast fermentation.

2. The coated organic acid preparation for preserving bakery products of Claim 1, wherein the melting point of the coating agent is 64-68°C.

3. The coated organic acid preparation for preserving bakery products of Claim 1 or 2, wherein the coating agent comprises one or more hydrogenated oils selected from the group consisting of hydrogenated canola oil, hydrogenated soybean oil and hydrogenated caster oil.

4. The coated organic acid preparation for preserving bakery products of Claim 3, wherein the coating agent consists of hydrogenated canola oil and lecithin.

5. The coated organic acid preparation for preserving bakery products of any preceding claim, wherein the organic acid is selected from the group consisting of sorbic acid and fumaric acid.

6. The coated organic acid preparation for preserving bakery products of Claim 5, wherein the organic acid is sorbic acid.

7. A method for manufacturing a bakery product comprising;
preparing batter for the bakery product comprising grain powder, a binder and the coated organic acid preparation of any of Claims 1-6; and
heating the batter,
provided that the bakery product is not those manufactured by yeast fermentation.

8. Improvement of the shelf life of a bakery product which is manufactured by heating a batter comprising grain powder and a binder component, comprising adding the coated organic acid preparation of any of Claims 1-6 to the batter, provided that the bakery product is not those manufactured by yeast fermentation.
